# EUROPEAN PATENT SPECIFICATION

(11) **EP 2 884 518 B1**
(45) Date of publication and mention of the grant of the patent: **12.10.2022**
(21) Application number: 14196304.1
(22) Date of filing: 04.12.2014
(51) Int. Cl.: H01H 33/666

(54) **SWITCHING APPARATUS FOR ELECTRICAL POWER SYTEMS**
Schaltvorrichtung für elektrische Leistungssysteme
Appareil de commutation pour systèmes d'alimentation électrique

(30) Priority: 10.12.2013 GB 201321787
(43) Date of publication of application: 17.06.2015
(73) Proprietor: Tavrida Electric Holding AG, 6330 Cham (CH)
(72) Inventor: Chaly, Alexey, 142432 Moscow Chernogolovka (RU); Anan'in, Vladimir, 99046 Sevastopol (UA); Dushenko, Alexander, 99058 Sevastopol (UA)
(74) Representative: FRKelly

(56) References cited:
- AU-A1- 2003 244 542
- CN-A- 102 412 519
- CN-A- 103 400 720
- DE-A1- 3 915 948
- US-A- 5 466 902
- US-A- 5 508 486
- US-A1- 2002 008 084
- US-A1- 2011 036 811

## Description

### Field of the Invention

The present invention relates to switching apparatus for electrical power systems, and in particular for use in switchgear for electrical power systems.

### Background to the Invention

A draw out circuit breaker (DOCB) is known a switching apparatus which performs both a switching and an isolating function. The DOCB is movable with respect to a switchgear enclosure between an engaged and an isolated position. In the engaged position, the DOCB performs its switching function through normal operation of the circuit breaker. In the isolated position, the DOCB provides the isolating function. The DOCB generally includes interlocks preventing the circuit breaker from closing when the DOCB is in an intermediate position (between engaged and isolated) and preventing DOCB movement when the circuit breaker is closed. This approach requires movement of the relatively heavy DOCB between the engaged and isolated positions. In addition movement into the engaged position requires simultaneous closing of 6 tulip contacts, which requires substantial force to be applied to the draw out plate. These features have an adverse affect on the operational simplicity, design cost and reliability of the DOCB.

In addition, a conventional DOCB does not provide an earthing function and so the associated switchgear usually requires an earthing switch (ES). The ES should be interlocked with the position of the draw out unit for safety reasons, but the interlock is not directly incorporated into the DOCB since the ES is a separate device. Therefore the ES needs to be mounted and tuned during switchgear assembly. This procedure is usually performed manually and this tends to reduce the interlock reliability and system safety.

Another problem of this approach is associated with the necessity to provide appropriate circuit-making capacity for the ES since it provides direct earthing of the downstream circuit. This tends to reduce the lifetime of the ES, which also negatively affects system safety and reliability.

Other known comparable switching apparatus take the form of a unit comprising a three-phase VCB interlocked with a three-phase three position selector. Each pole of the VCB includes magnetic actuator. The selector axis and VCB axis are mutually perpendicular. As a result the selector driving mechanism and VCB actuators are physically located far from each other. This hinders interlock reliability and increases overall dimensions and cost of the apparatus.

Another conventional design includes a three phase VCB with a single magnetic actuator controlling all three poles via mechanical linkages. It also includes a two position selector (Earthed-Engaged). Both the selector and the VCB have facilities for mutual interlocking that is provided at the time of switchgear assembly. A major disadvantage of this solution is the absence of a selector isolated position. This complicates the HV cable testing that is required for many applications. It also hinders application of this device as a point of isolation, which is also required by some utilities. Another problem of this design is that selector and VCB are separate devices. This makes interlocking assembly more human dependent, reducing reliability and safety of the entire solution. A further problem of this device is associated with the application of common actuator for all VCB poles. This requires addition of a mechanical linkage between poles transferring substantial force that reduces VCB reliability.

It would be desirable to provide a switching apparatus that mitigates at least some of the problems outlined above.

United States Patent Application US 2011/036811 A1 and United States Patent US 5508486 A each discloses an example of a switching apparatus for an electrical power system providing multiple functions depending on the position of a selector device. Chinese Patent Application CN 103400720

A discloses an isolating pole for a Ring Main Unit providing multiple functions depending on the position of a selector device comprising a rotating drive shaft.

CN 102412519 A discloses a multi-phase switching apparatus, for electrical power systems, according to the preamble of claim 1.

### Summary of the Invention

The present invention provides a multi-phase switching apparatus as claimed in claim 1.

Switching apparatus embodying the invention may be provided as a stand alone unit, or monoblock and/or incorporated into electrical switchgear.

Switching apparatus embodying the invention may include drive means being manually operable, and wherein, preferably, said base is adapted to removable receive a manual operating device for operating said drive means, or a manual operating device is coupled to said drive means at said base. Alternatively, said drive means may be power-operated, and preferably comprises a power-operated drive mechanism located at said base.

Other preferred features are recited in the dependent claims appended hereto.

Further advantageous aspects of the invention will become apparent to those ordinarily skilled in the art upon review of the following description of s specific embodiment and with reference to the accompanying drawings.

### Brief Description of the Drawings

An embodiment of the invention is now described by way of example and with reference to the accompanying drawings in which:
Figure 1 is a perspective view of a switching apparatus embodying one aspect of the invention;
Figure 2 is a perspective view of the apparatus of Figure 1 shown with insulation removed from some of its components;
Figure 3 shows a side sectioned view of one pole of the switching apparatus of Figure 1;
Figures 4A), 4B) and 4C) show a selector switch, being part of the apparatus of Figure 1, in an engaged state, an isolated state and an earthed state respectively; and
Figures 5A to 5F show respective schematic diagrams illustrating six different operating states of the apparatus of Figure 1.

### Detailed Description of the Drawings

Referring now to the drawings there is shown, generally indicated as 10, a multi-phase switching apparatus embodying one aspect of the invention. The apparatus 10 has first and second terminals 12A, 12B for connection to respective electrical conductors (not shown) which, for example, may be an electrical supply line, bus bar or part thereof. For example, the first terminal 12A may be connected to part of an electrical supply system (not shown), the other terminal 12B being connected to a feeder for supplying electrical power to an electrical device (not shown) or other part of the system.

The switching apparatus 10 comprises a switch device 14 coupled to a selector device 16. The switch device 14 is operable to make or break the electrical connection between the terminals 12A, 12B. The switch device 14 comprises electrical contacts 15A, 15B at least one of which is movable with respect to the other between a closed state and an open state. In the closed state the contacts 15A, 15B make the electrical connection and in the open state they break it. The switch device 14 further includes actuation means 18 for moving the contacts (15A, 15B) between the open and closed states. The actuating mechanism 18 has an actuation axis A1 - A1' that corresponds to the longitudinal axis of the switch device 14, and also to the direction of movement of the contacts 15A, 15B. One of the contacts 15B is electrically connected to the terminal 12B. The other contact 15A is electrically connectable to the terminal 12A by the selector 16 as is described in more detail hereinafter. In typical embodiments, the switch device 14 is responsive to detection of a fault condition to operate from its closed state to its open state. For example, the switch device 14 may comprise a circuit breaker, usually a medium voltage (MV) or high voltage (HV) circuit breaker, e.g. a vacuum circuit breaker (VCB). In this example, the contacts 15A, 15B are included in a vacuum interrupter 20. The actuating means 18 may include an electromagnetic actuator 22 (which may also be referred to as a magnetic actuator) coupled to the contacts 15A, 15B by a pulling insulator 24 or other suitable coupling device that is movable in the direction A1-A1' in response to operation of the actuator 22. In the following description it is assumed that the switch device 14 is a VCB but it will be understood that the invention is not limited to this.

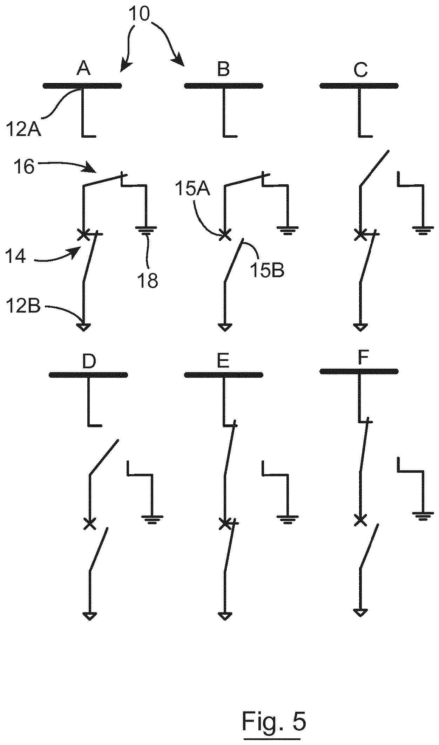

The selector device 16 is operable to adopt any one of multiple selector states including an engaged state (Figures 5E and 5F) and any one or both of an isolating state (Figures 5C and 5D) and an earthing state (Figures 5A and 5B). In preferred embodiments, the selector 16 supports all three of these states. The selector device 16 and VCB 14 are connected in series between the terminals 12A, 12B. With the selector in the engaged state, the VCB 14 is connected between the terminals 12A, 12B an electrical connection being made or broken between the terminals 12A, 12B depending on whether the VCB 14 is closed or open respectively. With the selector 16 in the isolated state, the terminal 12B is electrically isolated from the terminal 12A. With the selector 16 in the earthing state, the terminal 12B is connected to electrical ground 18 (when the VCB 14 is closed in this example).

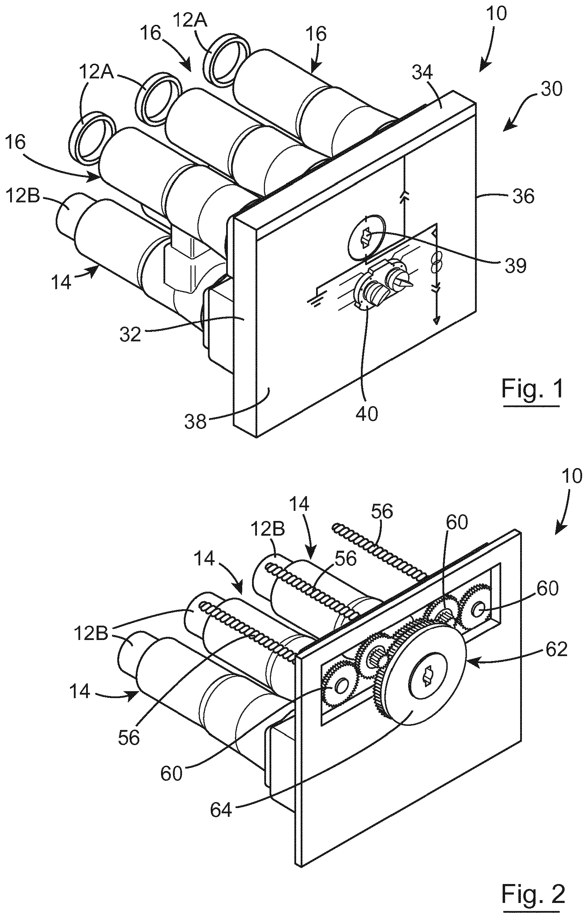

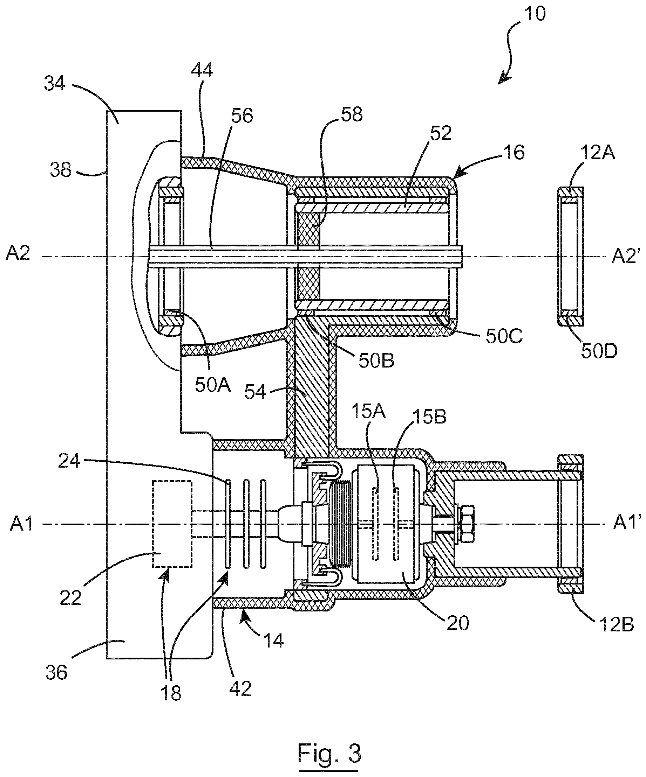

The apparatus 10 is suited for use with multi-phase electrical supply systems and so may be connected to a multi-phase supply line or bus bar that has a respective electrical conductor per phase (only one phase shown in Figures 3, 4 and 5). The apparatus 10 therefore includes a respective switching pole per phase, each switching pole comprising a respective VCB 14 and selector 16 couple (i.e. a multi-pole (or multi-phase) VCB and multi-pole selector, each pole of each device comprising the features described above and hereinafter in relation to one of the poles) . In the illustrated embodiment, the apparatus 10 comprises three such switching poles, as can best been seen from Figures 1 and 2. The present embodiment is described with reference to Figures 3 to 5 in relation to one switching pole and it will be understood that the same description applies to the other poles.

The switching apparatus 10 is preferably provided as a unit 30, or monoblock, containing the VCB 14 / selector 16 pair for each phase / pole. The unit 30 comprises a body 32 for carrying and/or housing the VCB and selector poles and associated components of the apparatus 10. In the illustrated embodiment, the body 32 comprises a base 34, for example comprising a plate, which conveniently carries the VCB and selector poles. The body 32 may also include an enclosure (not shown) which encloses the VCB and selector poles, and preferably also the base 34. In the illustrated embodiment, a sub-enclosure 36 encloses the base 34 and includes a control panel 38 carrying one or more manually operable controls 40 for operating the apparatus 10 as is described in more detail below. The body enclosure may be shaped and dimensioned to fit over the sub-enclosure 36 and to expose the control panel 38.

Preferably, each VCB 14 and selector 16 has one end 42, 44 coupled to the base 34 and projects from the base 34, preferably substantially perpendicularly. The respective longitudinal axes of the VCB 14 (A1-A1') and associated selector 16 (A2-A2') run substantially parallel with one another as can best be seen from Figure 3. The direction of the axes A1-A1' and A2-A2' is referred to herein as the longitudinal direction of the unit 30. For each pole, the VCB 14 and corresponding selector 16 are spaced apart in a first transverse direction which is perpendicular to the longitudinal direction. The VCB 14 and selector 16 of each pole are spaced apart from the VCB 14 and selector 16 of each other pole in a second transverse direction that is perpendicular to the longitudinal direction and the first transverse direction. In preferred embodiments, the selector 16 and VCB 14 are provided with an electrically insulating cover.

For each switching pole, the preferred unit 30 includes respective terminals 12A, 12B for connecting the unit 30 to the relevant external conductors (not shown). Terminal 12A is connectable to the selector 16 and terminal 12B is connected to contact 15B the VCB. The terminals 12A, 12B may be incorporated into the body enclosure.

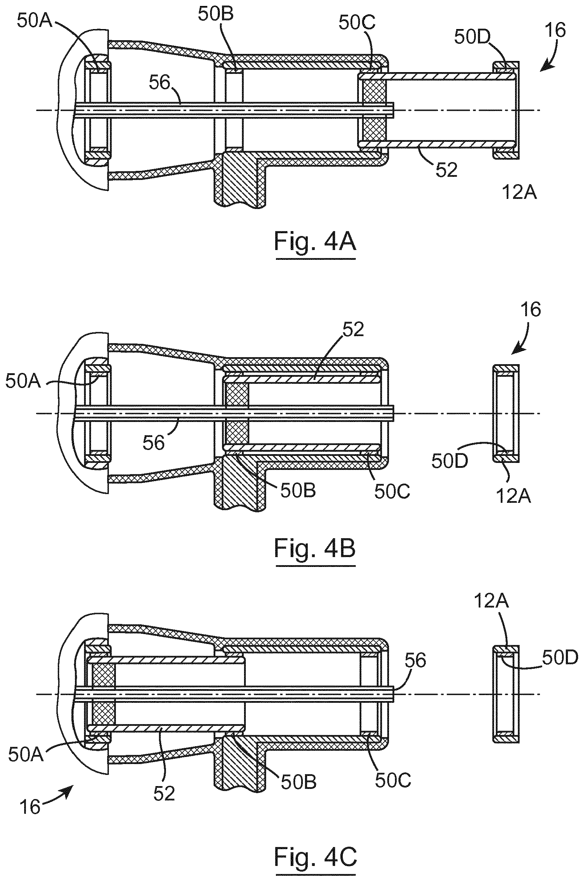

The selector 16 includes multiple fixed contacts 50A, 50B, 50C, 50D and a movable contact 52. The movable contact 52 is movable with respect to the fixed contacts between at least two different states, in at least one of which it makes contact with a respective two of the fixed contacts in order to make an electrical connection between them, each state corresponding to a selector state as described above. Accordingly, the fixed and movable contacts 50, 52 are electrically conductive, e.g. metallic. As can best be seen from Figures 4A to 4C, in the illustrated embodiment there are four fixed contacts: contact 50A which is electrically connected to electrical earth; contacts 50B and 50C which are electrically connected to contact 15A of the VCB 14 (and electrically isolated from earth and from terminal 12A); and contact 50D which is electrically connected to terminal 12A. The movable contact 52 is movable to adopt any one of three states corresponding to the engaged, isolated or earthing states described above. When the movable contact 52 is in contact with contacts 50A and 50B, the earthing state is adopted (Figure 4C). When the movable contact 52 is in contact with contacts 50B and 50C, the isolated state is adopted (Figure 4B). When the movable contact 52 is in contact with contacts 50C and 50D, the engaged state is adopted (Figure 4A). To facilitate the earthing state, the base 34 is earthed by any conventional means.

In alternative embodiments (not illustrated), these three states may be achievable using fewer than four fixed contacts. For example, contacts 50B and 50C may be replaced by a single contact intermediate 50A and 50D, the movable contact being movable between three states: the earthing state in which it contacts both 50A and the intermediate contact; the engaged state in which it contacts 50D and the intermediate contact; and the isolated state in which it contacts only the intermediate contact. Alternatively still, the movable contact 52 may adopt a position where it is not in contact with any of the fixed contacts when in the isolated state. In other embodiments (not illustrated) the selector may support only one or other of the isolated and earthed states, in which case one or more of the fixed contacts may be omitted as would be apparent to a skilled person.

In alternative embodiments (not illustrated), the fixed contact 50D (and therefore optionally also the contact 12A) may not be provided in the monoblock unit 30, instead being provided in another part of the electrical system to which the unit 30 is incorporated. For example the unit 30 may be incorporated into switchgear (not shown) for an electrical system, the contact 50D (and optionally the contact 12A) being provided in the switchgear outside of the unit 30.

The fixed contacts 50B, 50C are electrically connected to the contact 15A of the VCB 14 by an electrical connector 54 which may comprise a bus bar. Optionally, the connector 54 may be configured to provide mechanical support between the selector 16 and the VCB 14, for example by taking the form of a bus bar having an inherent capacity to provide mechanical support (e.g. by virtue of its dimensions and/or the material from which it is made), and/or by comprising, in addition to electrical connection means, one or more mechanical supports.

In the preferred embodiment, the fixed contacts 50A, 50B, 50C, 50D are mutually spaced-apart along the longitudinal axis A2-A2' of the selector 16. Advantageously, the fixed contacts 50A, 50B, 50C, 50D are aligned with one another in the longitudinal direction A2-A2'. In the preferred embodiment, the fixed contacts 50A, 50B, 50C, 50D each comprises a ring, the rings preferably being arranged co-axially with one another, and preferably centered around the axis A2-A2'.

The selector 16 includes actuation means for moving the contact 52 between its adoptable states along an actuation axis, which is in the longitudinal direction A2-A2'. The actuation means comprises a drive shaft 56, which is preferably electrically insulated, coupled to the contact 52. The drive shaft 56 has a longitudinal axis coincident with the axis A2-A2' and the coupling is such that rotation of the drive shaft 56 about its longitudinal axis A2-A2' causes movement of the contact 52 in the longitudinal direction A2-A2'. In the illustrated embodiment, the coupling between the contact 52 and the drive shaft 56 is provided by a screw thread (not shown) on the surface of the shaft 56 and a corresponding screw threaded bush 58 on the contact 52. Alternative couplings may be used, for example by providing a helical cam on the shaft 56 and a corresponding cam follower on the contact 52. Drive means for rotating the drive shaft 56 are provided in the unit 30, advantageously at the base 34, preferably within the sub-enclosure 36. The drive shaft 56 is coupled to the base 34 by the drive means. The drive means may take any suitable form and may be manually operable, e.g. comprising one or more gears 60 and/or a manually operable handle, crank or other manual control (not shown). Alternatively, the drive means may be power-operated, in which case a motor or other power operated drive mechanism may be provided at the base 36. More generally, it is preferred that at least part of the actuation means for moving the contact 52 is provided at the base 34, conveniently within the sub-enclosure 36.

In the illustrated embodiment, the movable contact 52 comprises a hollow body, which is preferably substantially cylindrical. The threaded bush 58 may be located inside the body 52. The body 52 is preferably co-axial with the fixed contacts 50, in particular when they take the form of rings, the fixed contacts 50 being dimensioned to fit over the movable contact 52. Preferably, means are provided for preventing the movable contact 52 from rotating as it moves between its adoptable states. For example, either one of inter-engageable male and female members (not shown, but for example one or more pins and one or more grooves) may be provided on the movable contact 52, the other being provided on at least one and optionally all of the fixed contacts 50. For example, one or more of the contacts 50 may be provided with one or more longitudinally extending grooves on its inner surface at one or more location around its periphery, and the movable contact 52 may comprise one or more corresponding projection extending from its outer surface at a location to match the groove(s), or vice versa. In any case, rotation of the drive shaft 56 causes linear movement of the contact 52 between its adoptable states. In an alternative embodiment (not illustrated) any one or more of the fixed contacts may be dimensioned and position to fit inside the movable contact 52 rather than around it as illustrated.

The respective actuation means for the selector 16 of each switch pole are coupled together so that the respective contacts 52 are moved simultaneously and in a like manner (speed and direction). Referring in particular to the example of Figure 2, the respective drive shaft 56 of each switch pole is coupled to a respective gear 60, the gears 60 being part of a gear system 62 for simultaneously driving the gears 60. The gear system 62 may include a driven gear 64 to which the gears 60 are coupled, preferably with the same gearing ratio. The driven gear 64 may be driven manually, e.g. by means of a removable handle (not illustrated). Alternatively, the driven gear 64 may be powered, as indicated above. The gear system 62 is advantageously provided at the base 34, conveniently within the sub-enclosure 36.

In the preferred embodiment, at least part of the actuating mechanism of the VCB 14 (or other switch device) is provided at the base 34, conveniently within the sub-enclosure 36. In the illustrated embodiment, the actuator 22 is located at the base 34.

The control panel 38 may include one or more manually operable control devices, e.g. switches knobs or handles, for operating the selector 16 and/or the VCB 14. In the illustrated embodiment, the control panel 38 includes a slot 39 for removably receiving a handle (not shown) for driving the gear system 62.

All of the relevant components mentioned above may be mounted on, coupled to or otherwise carried by the base 34 in any convenient conventional manner.

It will be apparent that switching apparatus 10 embodying the invention may be provided as a unit 30, which may be stand-alone or incorporated into switchgear (not shown), or incorporated directly into switchgear or other part of an electrical supply system, especially an MV or HV electrical supply system. Preferred embodiments of the invention may used for connection of two three phase lines or bus bars, including a three-phase VCB, each pole of which includes vacuum interrupter (VI) 20 and actuation means 18. The VCB actuation means 18 and contacts 15A, 15B move linearly, the actuation axis advantageously coinciding with the VI contact movement axis. At least part of the actuator is located on, preferably inside, a base that is earthed. The preferred apparatus 10 further includes a three phase, three position (earthed, isolated, engaged) linear selector 16, connected in series with the three phase VCB. The selector poles are parallel to the VCB poles and at least part 60, 62, 64 of the selector driving mechanism is advantageously located in the same base / frame as the VCB actuation means 18 (or at least the actuator 22 part thereof).

Although not illustrated, the apparatus 10, and the unit 30, typically include means for interlocking the operation of the VCB 14 and the selector 16. Advantageously, the interlocking means is configured to prevent the selector 16 from operating when the VCB is closed, and to prevent the VCB from closing when the selector 16 is in the intermediate state. For example, for the apparatus 10, and the unit 30, to meet IEC requirements would have at least the following interlocks: prevention of selector movement until VCB is open; prevention of VCB closing when selector is in an intermediate position (not in engaged, isolated or earthed). The interlocking means may be implemented by any convenient mechanical and/or electrical means.

It will be apparent that, in preferred embodiment, the selector 16 and VCB 14 are combined in one unit, the respective longitudinal axis of each pole of each of the selector 16 and VCB 14 being substantially parallel such that the respective actuatable components move in substantially parallel directions. Moreover, at least part of the respective actuating and/or operating mechanisms are located at a common base, as too may be the user control panel 38. This simplifies the overall design, particularly the interlocking facilities. In addition, the preferred selector 16 is relatively small (for example the space required for accommodating the gear system 62 is generally less than 50mm, and is not dependent on the selector stroke). This allows the apparatus 10 to be relatively small in the longitudinal direction, and facilitates the provision of the isolated state.

In comparison to the conventional devices discussed herein, preferred embodiments of the invention offer the following advantages: reduction of cost; reduction of size; increase in safety; increase in reliability; simplification of operation; improvement of functionality.

## Claims

1. A multi-phase switching apparatus (10) for electrical power systems, the apparatus comprising a base (34), a respective switching pole for each phase, each switching pole comprising:
a switch device (14) comprising first and second contacts (15A, 15B) that are actuatable between an open state and a closed state by switch actuation means (18); and
a selector device (16) coupled to said switch device and comprising a movable contact (52) that is actuatable between at least two states by selector actuation means (56),
wherein said switch device and said selector device extend from said base,
and wherein said switch actuation means and said selector actuation means are provided at said base,
and wherein said switch device has an actuation axis (A1-A1') along which at least part of said switch actuation means is movable, and said selector device has a actuation axis (A2-A2') along which said movable contact is movable, said switch device and said selector device extending from said base such that said respective actuation axes are substantially parallel with one another, and with the respective actuation axes of each other switching pole, and substantially perpendicular with said base,
said selector device including multiple fixed contacts (50A, 50B, 50C, 50D), said movable contact being movable with respect to the fixed contacts between said at least two different states, and wherein in at least one of said at least two states said movable contact makes an electrical connection between two of said fixed contacts,
said selector actuation means comprising a drive shaft (56) coupled to drive means (60), said drive means being located at said base and said drive shaft extending from said base along said selector device actuation axis,
the respective selector actuating means (56) for each switching pole being coupled together to effect simultaneous operation of the respective selector devices (16),
**characterized in that**, for each switching pole, said movable contact of the selector device is coupled to said drive shaft for movement along said selector device actuation axis in response to rotation of said drive shaft by said drive means.

2. The switching apparatus of claim 1, wherein said base is provided in a sub-enclosure (36), said drive means for rotating the drive shaft (56) and said switch actuation means (18) being provided in said sub-enclosure.

3. A switching apparatus as claimed in any preceding claim, wherein at least one, typically only one, of said first and second contacts (15A, 15B) is movable in the direction of said switch device actuation axis between said open and closed states.

4. A switching apparatus as claimed in any preceding claim, wherein said switch actuation means (18) comprises an actuator (22), preferably an electromagnetic actuator, said actuator being provided at said base, and wherein typically said actuator is movable in the direction of said switch device actuation axis.

5. A switching apparatus as claimed in any preceding claim, wherein said first and second contacts (15A, 15B) are incorporated into a vacuum interrupter, or wherein said switch device comprises a circuit breaker, for example a vacuum circuit breaker (14).

6. A switching apparatus as claimed in any preceding claim, wherein said fixed contacts (50A, 50B, 50C, 50D) are mutually spaced-apart, and advantageously aligned with one another, along the actuation axis of the selector device (16).

7. A switching apparatus as claimed in claim 6, wherein said fixed contacts (50A, 50B, 50C, 50D)) each comprises a ring, the rings preferably being arranged co-axially with one another, and preferably centered around the actuation axis of the selector device (16).

8. A switching apparatus as claimed in any preceding claim, wherein said drive means (60) comprises at least one gear located at said base (34).

9. A switching apparatus as claimed in any preceding claim wherein said movable contact (52) comprises a hollow body, preferably a substantially cylindrical hollow body, and wherein typically said fixed contacts (50A, 50B, 50C, 50D) each comprises a ring and wherein said body is shaped and dimensioned to fit within at least some and preferably all of said rings and, when so fitted, to make contact with said rings, and wherein said drive shaft (56) passes through said body.

10. A switching apparatus as claimed in any preceding claim comprising first and second terminals (12A, 12B), the switch device (14) and the selector device (16) being connected in series between the first and second terminals, wherein said at least two states of said selector device include an engaged state in which an electrical connection is made or broken between said first and second terminals depending on whether said first and second contacts (15A, 15B) are in the closed state or open state respectively, and wherein said at least two states optionally includes an isolated state in which said second terminal is electrically isolated from said first terminal, said at least two states preferably including an earthing state in which said second terminal is connected to electrical ground when said switch device is in its closed state.

11. A switching apparatus as claimed in claim 10, wherein at least one of said fixed contacts (50A, 50B, 50C, 50D) is electrically connected to said first contact (15A) of said switch device, said second electrical contact (15B) of said switch device (14) being electrically connected to said second terminal, and wherein, in said engaged state, said movable contact (52) makes an electrical connection between said at least one of said fixed contacts and said first terminal, and wherein optionally another of said fixed contacts is electrically connected to said first terminal, said movable contact being electrically connected to said another of said fixed contacts when in said engaged state, and wherein optionally a further of said fixed contacts is connected to electrical earth, said movable contact being electrically connected to said further of said fixed contacts and to said at least one of said fixed contacts when said selector device is in said earthing state.

12. A switching apparatus as claimed in claim 11, wherein, in said isolated state, said movable contact (52) is electrically isolated from said first terminal and from electrical earth.

13. A switching apparatus as claimed in any preceding claim, further including a control panel (38), said control panel including one or more manually operable control devices (40) for operating said selector device (16) and/or said switch device (14).

14. A switching apparatus as claimed in claim 1, wherein the respective selector actuating means for each switching pole are coupled together by a gear system (60).

15. A switching apparatus as claimed in claim 2, wherein said said drive means (60) comprises at least one gear being part of a gear system that couples together the respective selector actuating means for each switching pole, and wherein said gear system is located in said sub-enclosure (36).

16. A switching apparatus as claimed in any one of claims 11 to 15, wherein, for each of said switching poles, the switch device (14) and the selector device (16) are spaced apart in a direction perpendicular to said actuation axes, and wherein said at least one of said fixed contacts (50B, 50C) is electrically connected to said first contact (15A) by an electrical connector (54) that is configured to provide mechanical support between the selector device and the switch device.

## Patentansprüche

1. Mehrphasenschaltvorrichtung (10) für elektrische Leistungssysteme, wobei die Vorrichtung einen Sockel (34), einen jeweiligen Schaltpol für jede Phase umfasst, wobei jeder Schaltpol umfasst:
eine Schaltvorrichtung (14), die einen ersten und einen zweiten Kontakt (15A, 15B) umfasst, die durch eine Schalterbetätigungseinrichtung (18) zwischen einem offenen Zustand und einem geschlossenen Zustand betätigbar sind; und
eine Selektorvorrichtung (16), die an die Schaltvorrichtung gekoppelt ist und einen beweglichen Kontakt (52) umfasst, der durch eine Selektorbetätigungseinrichtung (56) zwischen mindestens zwei Zuständen betätigbar ist,
wobei sich die Schaltervorrichtung und die Selektorvorrichtung von dem Sockel erstrecken und wobei die Schalterbetätigungseinrichtung und die Selektorbetätigungseinrichtung an dem Sockel bereitgestellt sind,
und wobei die Schaltervorrichtung eine Betätigungsachse (A1-A1') aufweist, entlang der zumindest ein Teil der Schalterbetätigungseinrichtung bewegbar ist, und die Selektorvorrichtung eine Betätigungsachse (A2-A2') aufweist, entlang der der bewegliche Kontakt bewegbar ist, wobei sich die Schaltvorrichtung und die Selektorvorrichtung von dem Sockel derart erstrecken, dass die jeweiligen Betätigungsachsen im Wesentlichen parallel zueinander und zu den jeweiligen Betätigungsachsen jedes anderen Schaltpols und im Wesentlichen senkrecht zu dem Sockel sind,
wobei die Selektorvorrichtung mehrere feste Kontakte (50A, 50B, 50C, 50D) umfasst, wobei der bewegbare Kontakt in Bezug auf die festen Kontakte zwischen den mindestens zwei unterschiedlichen Zuständen bewegbar ist, und wobei der bewegbare Kontakt in mindestens einem der mindestens zwei Zustände eine elektrische Verbindung zwischen zwei der festen Kontakte herstellt,
wobei die Selektorbetätigungseinrichtung eine Antriebswelle (56) umfasst, die an eine Antriebseinrichtung (60) gekoppelt ist, wobei die Antriebseinrichtung an dem Sockel angeordnet ist und sich die Antriebswelle von dem Sockel entlang der Betätigungsachse der Selektorvorrichtung erstreckt,
wobei die jeweiligen Selektorbetätigungseinrichtungen (56) für jeden Schaltpol aneinander gekoppelt sind, um einen gleichzeitigen Betrieb der jeweiligen Selektorvorrichtungen (16) zu bewirken,
**dadurch gekennzeichnet, dass** für jeden Schaltpol der bewegbare Kontakt der Selektorvorrichtung an die Antriebswelle gekoppelt ist, um als Reaktion auf die Drehung der Antriebswelle durch die Antriebseinrichtung entlang der Betätigungsachse der Selektorvorrichtung bewegt zu werden.

2. Schaltvorrichtung nach Anspruch 1, wobei der Sockel in einem Untergehäuse (36) vorgesehen ist, wobei die Antriebseinrichtung zum Drehen der Antriebswelle (56) und die Schalterbetätigungseinrichtung (18) in dem Untergehäuse bereitgestellt sind.

3. Schaltvorrichtung nach einem der vorstehenden Ansprüche, wobei mindestens einer, typischerweise nur einer, von dem ersten und zweiten Kontakt (15A, 15B) in Richtung der Betätigungsachse der Schaltvorrichtung zwischen dem offenen und dem geschlossenen Zustand bewegbar ist.

4. Schaltvorrichtung nach einem der vorstehenden Ansprüche, wobei die Schalterbetätigungseinrichtung (18) einen Aktor (22) aufweist, vorzugsweise einen elektromagnetischen Aktor, wobei der Aktor an dem Sockel bereitgestellt ist und wobei der Aktor typischerweise in der Richtung der Schaltervorrichtungsbetätigungsachse bewegbar ist.

5. Schaltvorrichtung nach einem der vorstehenden Ansprüche, wobei der erste und der zweite Kontakt (15A, 15B) in einen Vakuumunterbrecher eingebaut sind, oder wobei die Schaltvorrichtung einen Leistungsschalter, beispielsweise einen Vakuumleistungsschalter (14), umfasst.

6. Schaltvorrichtung nach einem der vorstehenden Ansprüche, wobei die festen Kontakte (50A, 50B, 50C, 50D) entlang der Betätigungsachse der Selektorvorrichtung (16) voneinander beabstandet und vorteilhafterweise aneinander ausgerichtet sind.

7. Schaltvorrichtung nach Anspruch 6, wobei die festen Kontakte (50A, 50B, 50C, 50D) jeweils einen Ring umfassen, wobei die Ringe vorzugsweise koaxial zueinander und vorzugsweise um die Betätigungsachse der Selektorvorrichtung (16) herum zentriert angeordnet sind.

8. Schaltvorrichtung nach einem der vorstehenden Ansprüche, bei der die Antriebseinrichtung (60) mindestens ein Zahnrad aufweist, das an dem Sockel (34) angeordnet ist.

9. Schaltvorrichtung nach einem der vorstehenden Ansprüche, wobei der bewegbare Kontakt (52) einen Hohlkörper, vorzugsweise einen im Wesentlichen zylindrischen Hohlkörper, umfasst, und wobei typischerweise die festen Kontakte (50A, 50B, 50C, 50D) jeweils einen Ring umfassen und wobei der Körper so geformt und bemessen ist, dass er in mindestens einige und vorzugsweise alle Ringe passt und, wenn er so eingesetzt ist, mit den Ringen in Kontakt gelangt, und wobei die Antriebswelle (56) durch den Körper verläuft.

10. Schaltvorrichtung nach einem der vorstehenden Ansprüche, umfassend einen ersten und einen zweiten Anschluss (12A, 12B), wobei die Schaltvorrichtung (14) und die Selektorvorrichtung (16) zwischen den ersten und zweiten Anschluss in Reihe geschaltet sind, wobei die mindestens zwei Zustände der Selektorvorrichtung einen eingerückten Zustand beinhalten, in dem eine elektrische Verbindung zwischen dem ersten und zweiten Anschluss hergestellt oder unterbrochen wird, abhängig davon, ob sich der erste und der zweite Kontakt (15A, 15B) im geschlossenen Zustand oder im offenen Zustand befinden, und wobei bei die mindestens zwei Zustände wahlweise einen isolierten Zustand beinhalten, in dem der zweite Anschluss von dem ersten Anschluss elektrisch isoliert ist, wobei die mindestens zwei Zustände vorzugsweise einen geerdeten Zustand beinhalten, in dem der zweite Anschluss mit elektrischer Masse verbunden ist, wenn sich die Schaltvorrichtung in ihrem geschlossenen Zustand befindet.

11. Schaltvorrichtung nach Anspruch 10, wobei mindestens einer der festen Kontakte (50A, 50B, 50C, 50D) elektrisch mit dem ersten Kontakt (15A) der Schaltvorrichtung verbunden ist, wobei der zweite elektrische Kontakt (15B) der Schaltvorrichtung (14) elektrisch mit dem zweiten Anschluss verbunden ist, und wobei der bewegbare Kontakt (52) in dem eingerückten Zustand eine elektrische Verbindung zwischen dem mindestens einen der festen Kontakte und dem ersten Anschluss herstellt, und wobei wahlweise ein anderer der festen Kontakte elektrisch mit dem ersten Anschluss verbunden ist, wobei der bewegbare Kontakt elektrisch mit dem anderen der festen Kontakte verbunden ist, wenn er sich in dem eingerückten Zustand befindet, und wobei wahlweise ein weiterer der festen Kontakte mit elektrischer Erde verbunden ist, wobei der bewegbare Kontakt elektrisch ist mit dem weiteren der festen Kontakte und mit dem mindestens einen der festen Kontakte verbunden ist, wenn sich die Selektorvorrichtung in dem geerdeten Zustand befindet.

12. Schaltvorrichtung nach Anspruch 11, wobei in dem isolierten Zustand der bewegliche Kontakt (52) von dem ersten Anschluss und von der elektrischen Erde elektrisch isoliert ist.

13. Schaltvorrichtung nach einem der vorstehenden Ansprüche, die ferner eine Steuertafel (38) beinhaltet, wobei die Steuertafel eine oder mehrere manuell bedienbare Steuervorrichtungen (40) zum Betreiben der Selektorvorrichtung (16) und/oder der Schaltvorrichtung (14) beinhaltet.

14. Schaltvorrichtung nach Anspruch 1, wobei die jeweiligen Selektorbetätigungseinrichtungen für jeden Schaltpol durch ein Getriebesystem (60) aneinander gekoppelt sind.

15. Schaltvorrichtung nach Anspruch 2, wobei die Antriebseinrichtung (60) mindestens ein Zahnrad umfasst, das Teil eines Getriebesystems ist, das die jeweiligen Selektorbetätigungseinrichtungen für jeden Schaltpol aneinander koppelt, und wobei das Getriebesystem in dem Untergehäuse (36) angeordnet ist.

16. Schaltvorrichtung nach einem der Ansprüche 11 bis 15, wobei für jeden der Schaltpole die Schaltvorrichtung (14) und die Selektorvorrichtung (16) in einer Richtung senkrecht zu den Betätigungsachsen beabstandet sind, und wobei der mindestens eine der festen Kontakte (50B, 50C) durch einen elektrischen Verbinder (54), der dazu konfiguriert ist, eine mechanische Abstützung zwischen der Selektorvorrichtung und der Schaltvorrichtung bereitzustellen, elektrisch mit dem ersten Kontakt (15A) verbunden ist.

## Revendications

1. Appareil de commutation multiphase (10) pour systèmes d'alimentation électrique, l'appareil comprenant une base (34), un pôle de commutation respectif pour chaque phase, chaque pôle de commutation comprenant :
un dispositif de commutation (14) comprenant des premier et second contacts (15A, 15B) qui sont actionnables entre un état ouvert et un état fermé par un moyen d'actionnement de commutateur (18) ; et
un dispositif sélecteur (16) couplé audit dispositif de commutation et comprenant un contact mobile (52) qui peut être actionné entre au moins deux états par un moyen d'actionnement de sélecteur (56),
dans lequel ledit dispositif de commutation et ledit dispositif sélecteur s'étendent à partir de ladite base, et dans lequel ledit moyen d'actionnement de commutateur et ledit moyen d'actionnement de sélecteur sont prévus au niveau de ladite base,
et dans lequel ledit dispositif de commutation a un axe d'actionnement (A1-A1') le long duquel au moins une partie du moyen d'actionnement de commutateur est mobile, et ledit dispositif sélecteur a un axe d'actionnement (A2-A2') le long duquel ledit contact mobile est mobile, ledit dispositif de commutation et ledit dispositif sélecteur s'étendant à partir de ladite base de sorte que lesdits axes d'actionnement respectifs sont sensiblement parallèles entre eux, et avec les axes d'actionnement respectifs de l'autre pôle de commutation, et sensiblement perpendiculaires à ladite base,
ledit dispositif sélecteur comportant plusieurs contacts fixes (50A, 50B, 50C, 50D), ledit contact mobile étant mobile par rapport aux contacts fixes entre lesdits au moins deux états différents, et dans lequel, dans au moins un desdits au moins deux états, ledit contact mobile établit une connexion électrique entre deux desdits contacts fixes,
ledit moyen d'actionnement de sélecteur comprenant un arbre d'entraînement (56) couplé à des moyens d'entraînement (60), ledit moyen d'entraînement étant situé au niveau de ladite base et ledit arbre d'entraînement s'étendant depuis ladite base le long dudit axe d'actionnement du dispositif sélecteur,
les moyens d'actionnement de sélecteur respectifs (56) pour chaque pôle de commutation étant couplés ensemble pour effectuer un fonctionnement simultané des dispositifs sélecteurs respectifs (16),
**caractérisé en ce que**, pour chaque pôle de commutation, ledit contact mobile du dispositif sélecteur est couplé audit arbre d'entraînement pour se déplacer le long dudit axe d'actionnement du dispositif sélecteur en réponse à la rotation dudit arbre d'entraînement par lesdits moyens d'entraînement.

2. Appareil de commutation selon la revendication 1, dans lequel ladite base est prévue dans une sous-enveloppe (36), ledit moyen d'entraînement pour faire tourner l'arbre d'entraînement (56) et ledit moyen d'actionnement de commutateur (18) étant prévus dans ladite sous-enveloppe.

3. Appareil de commutation selon une quelconque revendication précédente, dans lequel au moins un, typiquement un seul, desdits premier et deuxième contacts (15A, 15B) est mobile dans la direction dudit axe d'actionnement du dispositif de commutation entre lesdits états ouvert et fermé.

4. Appareil de commutation selon une quelconque revendication précédente, dans lequel ledit moyen d'actionnement de commutateur (18) comprend un actionneur (22), de préférence un actionneur électromagnétique, ledit actionneur étant prévu au niveau de ladite base, et dans lequel typiquement ledit actionneur est mobile dans la direction dudit axe d'actionnement du dispositif de commutation.

5. Appareil de commutation selon une quelconque revendication précédente, dans lequel lesdits premier et second contacts (15A, 15B) sont incorporés dans un interrupteur à vide, ou dans lequel ledit dispositif de commutation comprend un disjoncteur, par exemple un disjoncteur à vide (14).

6. Appareil de commutation selon une quelconque revendication précédente, dans lequel lesdits contacts fixes (50A, 50B, 50C, 50D) sont mutuellement espacés, et avantageusement alignés les uns avec les autres, le long de l'axe d'actionnement du dispositif sélecteur (16).

7. Appareil de commutation selon la revendication 6, dans lequel lesdits contacts fixes (50A, 50B, 50C, 50D) comprennent chacun un anneau, les anneaux étant de préférence disposés coaxialement les uns par rapport aux autres, et de préférence centrés autour de l'axe d'actionnement du dispositif sélecteur (16).

8. Appareil de commutation selon une quelconque revendication précédente, dans lequel ledit moyen d'entraînement (60) comprend au moins un engrenage situé au niveau de ladite base (34).

9. Appareil de commutation selon une quelconque revendication précédente, dans lequel ledit contact mobile (52) comprend un corps creux, de préférence un corps creux sensiblement cylindrique, et dans lequel typiquement lesdits contacts fixes (50A, 50B, 50C, 50D) comprennent chacun un anneau et dans lequel ledit corps est formé et dimensionné pour s'ajuster dans au moins certains et de préférence l'ensemble desdits anneaux et, lorsqu'ils sont ainsi ajustés, pour entrer en contact avec lesdits anneaux, et dans lequel ledit arbre d'entraînement (56) traverse ledit corps.

10. Appareil de commutation selon une quelconque revendication précédente, comprenant des première et seconde bornes (12A, 12B), le dispositif de commutation (14) et le dispositif sélecteur (16) étant connectés en série entre les première et seconde bornes, dans lequel lesdits au moins deux états dudit dispositif sélecteur comportent un état mis en prise dans lequel une connexion électrique est établie ou interrompue entre lesdites première et seconde bornes selon que lesdits premier et second contacts (15A, 15B) sont respectivement à l'état fermé ou à l'état ouvert, et dans lequel lesdits au moins deux états comportent éventuellement un état isolé dans lequel ladite seconde borne est isolée électriquement de ladite première borne, lesdits au moins deux états comportant de préférence un état de mise à la terre dans lequel ladite seconde borne est connectée à la masse électrique lorsque ledit dispositif de commutation est dans son état fermé.

11. Appareil de commutation selon la revendication 10, dans lequel au moins l'un desdits contacts fixes (50A, 50B, 50C, 50D) est connecté électriquement audit premier contact (15A) dudit dispositif de commutation, ledit second contact électrique (15B) dudit dispositif de commutation (14) étant électriquement connecté à ladite seconde borne, et dans lequel, dans ledit état mis en prise, ledit contact mobile (52) établit une connexion électrique entre ledit au moins un desdits contacts fixes et de ladite première borne, et dans lequel éventuellement un autre parmi lesdits contacts fixes sont connectés électriquement à ladite première borne, ledit contact mobile étant connecté électriquement audit autre desdits contacts fixes lorsqu'il est dans ledit état mis en prise, et dans lequel éventuellement un autre desdits contacts fixes est connecté à la terre électrique, ledit contact mobile étant électriquement connecté audit autre desdits contacts fixes et audit au moins un desdits contacts fixes lorsque ledit dispositif sélecteur est dans ledit état de mise à la terre.

12. Appareil de commutation selon la revendication 11, dans lequel, dans ledit état isolé, ledit contact mobile (52) est isolé électriquement de ladite première borne et de la terre électrique.

13. Appareil de commutation selon une quelconque revendication précédente, comportant en outre un panneau de commande (38), ledit panneau de commande comportant un ou plusieurs dispositifs de commande actionnables manuellement (40) pour actionner ledit dispositif sélecteur (16) et/ou ledit dispositif de commutation (14) .

14. Appareil de commutation selon la revendication 1, dans lequel les moyens d'actionnement de sélecteur respectifs pour chaque pôle de commutation sont couplés ensemble par un système d'engrenage (60).

15. Appareil de commutation selon la revendication 2, dans lequel ledit moyen d'entraînement (60) comprend au moins un engrenage faisant partie d'un système d'engrenage qui couple ensemble les moyens d'actionnement de sélecteur respectifs pour chaque pôle de commutation, et dans lequel ledit système d'engrenage est situé dans ladite sous-enveloppe (36).

16. Appareil de commutation selon l'une quelconque des revendications 11 à 15, dans lequel, pour chacun desdits pôles de commutation, le dispositif de commutation (14) et le dispositif sélecteur (16) sont espacés dans une direction perpendiculaire auxdits axes d'actionnement, et dans lequel ledit au moins un desdits contacts fixes (50B, 50C) est connecté électriquement audit premier contact (15A) par un connecteur électrique (54) qui est configuré pour fournir un support mécanique entre le dispositif sélecteur et le dispositif de commutation.
